# DEMANDE DE BREVET EUROPEEN

(11) **EP 0 702 451 A1**
(43) Date de publication de la demande: **20.03.1996**
(21) Numéro de dépôt: 95114175.3
(22) Date de dépôt: 09.09.1995
(51) Int. Cl.: H02P 7/62

(54) **Dispositif de commande d'un moteur synchrone**

(30) Priorité: 19.09.1994 FR 9411136
(71) Demandeur: Minimotor S.A., CH-6981 Croglio (CH)
(72) Inventeur: Blanc, Stéphane, CH-6987 Caslano (CH)
(74) Mandataire: Barbeaux, Bernard

(57) **Abrégé**

Le dispositif (1) comporte des moyens d'alimentation (4 à 7) qui fournissent aux bobines statoriques du moteur synchrone (2) des tensions sinusoïdales (U1 à U3), et des moyens d'asservissement (8, 9) qui répondent à un signal (D1 à D3) de détection de la position angulaire du rotor de ce moteur (2) et à un signal de consigne (A) représentatif d'un angle de charge de consigne pour asservir l'angle de charge du moteur (2) à l'angle de charge de consigne en variant l'amplitude de la tension d'alimentation du moteur.

## Description

La présente invention se rapporte à un dispositif de commande d'un moteur synchrone, c'est-à-dire d'un moteur électrique agencé et commandé de manière que, lorsqu'il fonctionne, ses champs magnétiques statorique et rotorique tournent à la même vitesse.

Parmi les nombreux dispositifs connus qui peuvent être utilisés pour commander un moteur synchrone, on mentionnera celui qui se réduit a une simple source de tensions alternatives convenablement déphasées et appliquées chacune à une des phases du moteur. Ces tensions alternatives ont évidemment toutes la même fréquence, qui peut être fixe ou variable, et qui détermine la vitesse de rotation du moteur.

Un tel dispositif de commande peut être extrêmement simple et bon marché, et la vitesse de rotation du moteur qui lui est associé peut être réglée avec une bonne précision, même lorsqu'elle est relativement faible.

Par contre, un tel dispositif n'est utilisable que si le moteur qu'il commande fonctionne dans de conditions stables, de brusques variations de la charge qu'il entraîne pouvant provoquer une perte du synchronisme entre les champs magnétiques statorique et rotorique, souvent appelée décrochage, et donc un arrêt du moteur.

On connaît du document FR 2 227 675 un procédé et un dispositif de réglage de l'angle de charge d'un moteur de type synchrone. Selon ce document, il est prévu de détecter la position du rotor de manière à déterminer l'angle de charge effectif du moteur et de commander des thyristors de puissance du convertisseur de fréquence alimentant le moteur en fonction de la mesure de l'angle de charge effectif. Pour ce faire, un dispositif de réglage et de régulation fournit un signal de fréquence de référence et un signal d'angle de charge de référence, lesquels sont traités conjointement au signal correspondant à l'angle de charge effectif pour commander le moteur. Selon deux variantes proposées, soit la fréquence est maintenue constante et l'angle de charge est varié, soit l'angle de charge est maintenu constant et la fréquence est variée pour fournir le couple de force demandé au moteur.

Dans le cas de la première variante susmentionnée, le moteur ne peut pas s'adapter à des charges ayant de fortes variations sans risques de décrocher. Par contre, dans la seconde variante susmentionnée, le moteur n'est pas stabiliser en vitesse de rotation, ce qui limite ses applications.

On connaît également du document US 5,006,774 un procédé de commande d'un moteur synchrone dans lequel l'angle de charge du moteur est maintenu constant. Pour ce faire, il est prévu de détecter la position du rotor et de la comparer, à l'aide d'un comparateur, à un signal donnant la phase du signal de commande du moteur. Afin de maintenir l'angle de charge constant, le comparateur fournit un signal de correction à un déphaseur précédant le circuit logique de commande de l'inverseur de puissance prévu pour alimenter le moteur.

Un tel système de commande n'est pas adapté à une grande variation de charge. Il sert seulement à atténuer les oscillations du moteur en agissant sur la phase du signal de commande. On notera qu'une telle commande limite la précision de la vitesse de rotation du rotor.

Le but de la présente invention est de proposer un dispositif de commande d'un moteur synchrone qui assure un fonctionnement à vitesse constante tout en s'adaptant à des variations de charge relativement importantes et sans pour autant présenter le risque de décrocher.

La présente invention a donc pour objet un dispositif de commande d'un moteur synchrone ayant un stator comportant au moins un enroulement statorique et un rotor, ce dispositif de commande comprenant :
- une source de puissance servant à l'alimentation dudit enroulement;
- des moyens de détection de la position dudit rotor;
- des premiers moyens de commande agencés pour fournir, à ladite source de puissance, un signal périodique ayant une fréquence prédéterminée;
- des premiers moyens comparateurs agencés pour produire un signal de mesure correspondant à l'angle de charge dudit moteur en réponse à un signal de détection de la position de ce rotor fourni par lesdits moyens de détection et audit signal périodique fourni par lesdits premiers moyens de commande;
ce dispositif de commande étant caractérisé en ce qu'il comprend en outre des deuxièmes moyens de commande de l'amplitude de la tension d'alimentation agencés pour fournir à ladite source de puissance un signal de commande en fonction dudit signal de mesure et d'un premier signal de consigne, ladite source de puissance et lesdits deuxièmes moyens de commande étant agencés de manière que l'amplitude de la tension d'alimentation varie en fonction dudit signal de commande pour que la valeur dudit signal de mesure soit sensiblement égale à la valeur dudit premier signal de consigne.

Grâce à ces caractéristiques, le moteur peut fournir un couple variable avec une vitesse constante et un angle de charge sensiblement constant, l'amplitude de la tension d'alimentation variant pour répondre à la charge du moteur.

D'autres buts et avantages de la présente invention apparaîtront à la lecture de la description qui va être faite ci-après en relation avec les dessins annexés dans lesquels :
- la figure 1 est un schéma bloc d'une forme d'exécution du circuit de commande selon la présente invention; et
- la figure 2 représente la variation du couple fourni par un moteur synchrone en fonction de son angle de charge, pour deux valeurs de l'amplitude de ses tensions d'alimentation.

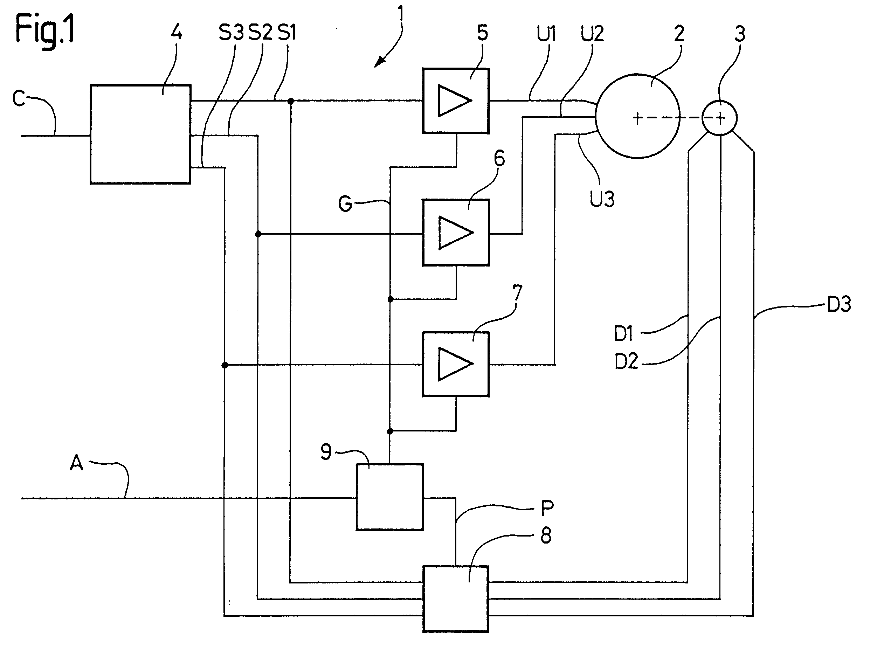

Dans sa forme d'exécution représentée schématiquement et à titre d'exemple non limitatif à la figure 1, le dispositif de commande selon la présente invention, désigné par la référence générale 1, est destiné à commander un moteur synchrone triphasé bipolaire également représenté dans cette figure 1 avec la référence 2. Le rotor de ce moteur 2, qui n'a pas été représenté séparément peut être couplé à une charge mécanique quelconque, fixe ou variable, qui n'a pas non plus été représentée.

Comme cela sera décrit en détail plus loin, le dispositif 1 est agencé de manière à fournir au moteur 2 une tension d'alimentation triphasée ou, plus précisément, à fournir aux bobines, ou phases, du stator de ce moteur 2, qui n'ont pas été représentées, trois tensions sinusoïdales U1, U2 et U3 ayant la même fréquence f et la même amplitude V, et déphasées de 120° les unes par rapport aux autres.

Pour ne pas compliquer inutilement la description qui va suivre, on admettra que les courants qui circulent dans ces bobines en réponse à ces tensions U1 à U3 sont sensiblement sinusoïdaux et en phase avec ces tensions. En d'autres termes, on admettra que l'impédance présentée par le moteur 2 au dispositif 1 est pratiquement résistive. Un exemple de moteur présentant cette caractéristique est décrit dans la demande de brevet DE-A-4 205 985. L'homme du métier comprendra aisément que la présente invention n'est pas limitée à la commande de moteur présentant cette caractéristique et verra facilement comment adapter le dispositif qui va être décrit ci-après pour qu'il puisse commander d'autres types de moteurs.

On rappellera que, dans le présent exemple, le moteur 2 est bipolaire, ce qui a comme conséquence que la fréquence de rotation de son rotor, c'est-à-dire le nombre de tours par seconde de celui-ci, est égale à la fréquence f des tensions U1, U2 et U3.

On rappellera également que l'on appelle angle de charge d'un moteur l'angle du déphasage entre son champ magnétique statorique et son champ magnétique rotorique.

Dans le présent exemple, le moteur 2 comporte un détecteur 3 de la position angulaire de son rotor, qui est agencé de manière à fournir un signal de détection formé de trois signaux distincts D1, D2 et D3 prenant chacun périodiquement un premier état pendant un demi-tour du rotor et un deuxième état pendant l'autre demi-tour de ce rotor. Le détecteur 3 est en outre agencé de manière que ces trois signaux D1, D2 et D3 sont décalés de 120° d'angle de rotation du rotor du moteur 2 les uns par rapport aux autres. Il en découle que, lorsque le moteur 2 fonctionne, un des signaux D1, D2 et D3 change d'état chaque fois que le rotor de ce moteur 2 a tourné de 60° ou, en d'autres termes, que la résolution du capteur 3 est de 60°. Dans la suite de cette description, chacun des instants successifs où se produit l'un des changements d'état de l'un des signaux D1, D2 et D3 sera appelé instant de détection I.

Le détecteur 3 est en outre agencé de manière que, lorsque l'angle de charge du moteur 2 est nul, les signaux D1, D2 et D3 sont respectivement en phase avec la tension U1, la tension U2 et la tension U3. En d'autres termes, et toujours lorsque l'angle de charge du moteur 2 est nul, chacun des signaux D1, D2 et D3 change d'état chaque fois que la tension U1, la tension U2 ou, respectivement, la tension U3 passe par zéro.

Le détecteur 3 ne sera pas décrit en détail car il peut être réalisé de diverses manières bien connues. On mentionnera simplement que, dans les cas où le champ magnétique rotorique du moteur 2 est produit par un aimant permanent, le détecteur 3 peut être simplement constitué par trois sondes de Hall, qui sont des éléments bien connus, disposées régulièrement autour du rotor du moteur 2.

Le dispositif 1 comporte une source 4 fournissant un signal périodique formé de trois signaux sinusoïdaux S1, S2 et S3 ayant tous la même amplitude fixe et la même fréquence, et déphasés de 120° les uns par rapport aux autres. La source 4 est agencée de manière que la fréquence de ces signaux S1, S2 et S3 est égale à une fréquence de consigne fc représentée par un signal de consigne C, qui peut être produit de manière quelconque, par exemple par un simple potentiomètre actionné manuellement. Le signal de consigne C peut également être produit automatiquement par un système de régulation englobant le dispositif 1.

Les tensions U1, U2 et U3 fournies aux bobines du stator du moteur 2 sont produites par trois amplificateurs de puissance 5, 6 et 7 dont les entrées reçoivent respectivement les signaux S1, S2 et S3.

Les amplificateurs 5, 6 et 7 sont identiques et sont agencés de manière que les tensions U1, U2 et U3 soient respectivement en phase avec les signaux S1, S2 et S3, et que l'amplitude de ces tensions U1, U2 et U3 soit déterminée par la valeur d'un signal G de commande de leur gain, dont l'élaboration sera décrite en détail plus loin. En d'autres termes, les amplificateurs 5, 6 et 7 sont agencés de manière que leur gain soit variable en fonction de la valeur du signal G.

Le dispositif 1 comporte en outre un circuit comparateur 8 qui reçoit d'une part les signaux S1, S2 et S3 fournis par la source 4 et, d'autre part, les trois signaux D1, D2 et D3 fournis par le détecteur 3 de la position angulaire du moteur 2. Ce comparateur 8 est agencé de manière à fournir un signal P dont la valeur est représentative, entre deux instants de détection I successifs, de la valeur du déphasage entre les signaux S1 à S3 et les signaux D1 à D3 au premier de ces instants de détection I, et donc de l'angle de charge du moteur 2 à ce même premier instant I.

Le signal P constitue donc un signal de mesure de l'angle de charge du moteur 2.

Pour une raison qui sera rendue évidente plus loin, le comparateur 8 est en outre agencé de manière que la valeur du signal P augmente lorsque l'angle de charge du moteur 2 augmente et vice-versa.

Le dispositif 1 comporte également un deuxième circuit comparateur, désigné par la référence 9, qui reçoit d'une part le signal P représentant l'angle de charge du moteur 2 et, d'autre part, un signal A dont on verra plus loin qu'il constitue un signal de consigne représentatif d'un angle de charge de consigne. Le comparateur 9 est agencé de manière à produire le signal G de commande du gain des amplificateurs 5 à 7 avec une valeur qui est, dans te présent exemple, une fonction intégrableen fonction du temps de la différence entre les signaux P et A. En d'autres termes, la valeur du signal G est constante tant que les signaux P et A sont égaux, et cette valeur augmente ou diminue selon que la différence entre ces signaux P et A est positive ou négative.

Les circuits 4 à 9 qui viennent d'être mentionnés ne seront pas décrits plus en détail car ils sont bien connus et leur réalisation ne posera pas de problème particulier à un spécialiste.

Avant de commencer la description du fonctionnement du dispositif 1, on rappellera que si les courants qui passent dans les bobines d'un moteur synchrone sont sinusoïdaux, le couple fourni par ce moteur dépend de l'intensité de ces courants et de l'angle de charge de ce moteur.

Plus précisément, pour un angle de charge donné, te couple fourni par un tel moteur augmente lorsque l'intensité de ces courants augmente, et pour une intensité donnée de ces courants, ce couple augmente sinusoïdalement avec cet angle de charge.

Dans le présent exemple où on a admis que l'impédance du moteur 2 est pratiquement résistive, le couple fourni par ce moteur 2 pour un angle de charge donné augmente donc avec l'amplitude des tensions U1 à U3, et pour une amplitude donnée de ces tensions, ce couple augmente sinusoïdalement avec cet angle de charge.

On rappellera également que si l'angle de charge du moteur dépasse 90°, il se produit un décrochage et le moteur s'arrête.

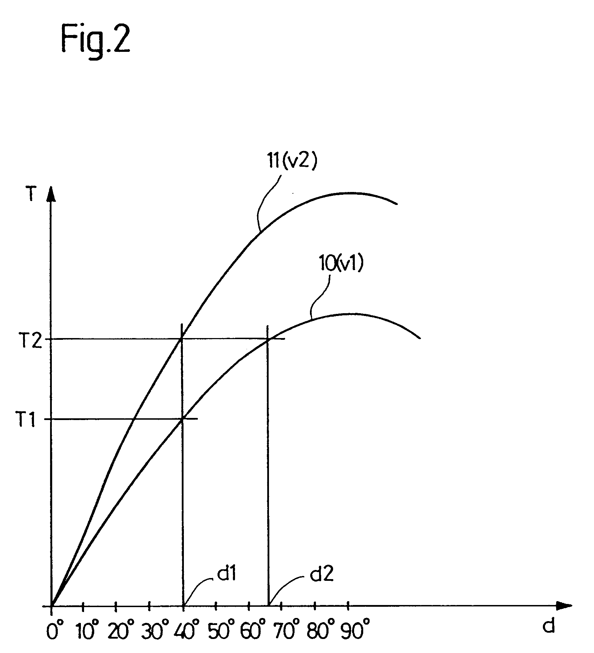

Les courbes 10 et 11 de la figure 2 représentent schématiquement et respectivement la variation du couple T fourni par le moteur 2 en fonction de son angle de charge d pour deux amplitudes V1 et V2 des tensions U1, U2 et U3 appliquées aux bobines du stator de ce moteur 2, l'amplitude V2 étant supérieure à l'amplitude V1.

On admettra que, à l'instant où commence la description du fonctionnement du dispositif 1 qui va suivre, le signal C a une valeur C1 pour laquelle les signaux S1 et S3 et tes tensions U1 à U3 ont une fréquence f1, et le signal A a une valeur A1 dont on verra plus loin qu'elle correspond à un angle de charge d1 du moteur 2.

On admettra également que le moteur 2 fonctionne depuis un certain temps dans un régime stable, c'est-à-dire que la fréquence de rotation de son rotor est aussi égale à f1 et que le couple moteur T qu'il fournit a une valeur égale à celle du couple de freinage exercé sur son rotor par la charge qu'il entraîne. Ces deux couples sont désignés par la référence T1 dans la figure 2.

On admettra encore que les tensions U1 à U3 ont l'amplitude V1 pour laquelle le couple T fourni par le moteur 2 est représenté par la courbe 10 de la figure 2, et que l'angle de charge d de ce moteur 2 a donc la valeur d1 indiquée dans cette figure 2 et qui est égale à 40° dans cet exemple.

La fréquence de rotation du rotor du moteur 2 étant égale à f1, il en est de même de cette des signaux D1 à D3. En outre, la différence de phase entre les tensions U1 à U3 et les signaux D1 à D3 étant égale à l'angle de charge d1 du moteur 2, il en est de même de la différence de phase entre les signaux S1 à S3 et ces signaux D1 à D3. Le signal P produit par te comparateur 8 a donc une valeur P1 représentative de l'angle de charge d1 du moteur 2.

Pour une raison qui sera rendue évidente plus loin, cette valeur P1 du signal P est égale à la valeur A1 du signal A, et te signal G a donc une valeur constante G1 qui est celle pour laquelle les tensions U1 à U3 ont l'amplitude V1.

Considérons maintenant un cas où le couple de freinage exercé sur le moteur 2 par ta charge qu'il entraîne augmente brusquement et prend une nouvelle valeur désignée par T2 à ta figure 2.

En réponse à cette augmentation du couple de freinage, l'angle de charge d du moteur 2 augmente jusqu'à la valeur d2 pour laquelle le couple T fourni par ce moteur 2 a la valeur T2 lorsque l'amplitude des tensions U1, U2 et U3 a la valeur V1. Après avoir très brièvement diminué, la fréquence de rotation du rotor du moteur 2 se stabilise à nouveau à la fréquence f1 des tensions U1 à U3. Cette situation resterait inchangée si ces tensions U1 à U3 restaient constantes.

Mais au premier instant de détection I suivant l'augmentation du couple de freinage, le comparateur 9 donne au signal P une nouvelle valeur P2 correspondant à la nouvelle valeur d2 de l'angle de charge d et donc supérieure à l'ancienne valeur P1.

La différence entre le signal P et le signal A, dont la valeur reste égale à A1, devient donc positive, de sorte que le signal G commence à augmenter à partir de son ancienne valeur G1.

L'amplitude V des tensions U1 à U3 commence donc également à augmenter à partir de sa valeur V1, en même temps que le signal G.

Cette augmentation progressive de l'amplitude V des tensions U1 à U3 a comme conséquence que l'angle de charge d du moteur 2 diminue à nouveau, de même que le signal P et que la différence entre ce dernier et le signal A, cette diminution de cette différence entraînant à son tour une diminution de la croissance du signal G.

Le processus se termine lorsque l'angle de charge d a de nouveau atteint la valeur d1. Le signal P a donc à nouveau la valeur P1 égale à la valeur A1 du signal A, le signal G a atteint une nouvelle valeur G2 et l'amplitude V des tensions U1, U2 et U3 a atteint une nouvelle valeur V2 qui est celle pour laquelle le couple T du moteur 2 a la valeur T2 lorsque l'angle de charge d a la valeur d1.

A la fin de ce processus, le moteur 2 fonctionne donc à nouveau dans un régime stable.

Il est évident qu'un processus similaire à celui qui vient d'être décrit se déroule lorsque le couple de freinage exercé par la charge entraînée par le moteur 2 diminue, le dispositif 1 répondant à cette diminution de ce couple de freinage en diminuant l'amplitude V des tensions U1 à U3 jusqu'à la valeur pour laquelle le couple T fourni par le moteur 2 est égal à ce nouveau couple de freinage lorsque son angle de charge d a la valeur d1.

On voit facilement que si la valeur du signal A est modifiée sans que le couple de freinage appliqué au rotor du moteur 2 ne change, le dispositif 1 répond à cette modification en réglant l'amplitude V des tensions U1 à U3 à la valeur pour laquelle, d'une part, le couple T fourni par ce moteur 2 est égal à ce couple de freinage et, d'autre part, l'angle de charge d de ce moteur 2 est égal à l'angle de charge de consigne représenté par la nouvelle valeur du signal A.

En résumé, on voit que le dispositif 1 asservit l'angle de charge d du moteur 2 à une valeur égale à celle de l'angle de charge de consigne représenté par le signal A quel que soit cet angle de charge de consigne et quelles que soient les variations du couple de freinage appliqué au rotor de ce moteur 2.

On voit en outre que cet asservissement est réalisé indépendamment de la fréquence de rotation du rotor du moteur 2.

Le fait qu'un dispositif de commande selon la présente invention asservit l'angle de charge du moteur qui lui est associé à un angle de charge de consigne dont la valeur peut être choisie librement permet de faire fonctionner ce moteur en permanence dans les conditions les plus favorables compte-tenu des caractéristiques de la charge qu'il entraîne. Ainsi, lorsque cette dernière est relativement constante et/ou que ses variations sont relativement lentes, il est possible de choisir pour l'angle de charge du moteur une valeur relativement élevée, de 70° ou 80° par exemple, pour laquelle le rendement du moteur est proche de son maximum, sans risquer un décrochage de ce moteur. Si par contre la charge entraînée par te moteur peut présenter des variations importantes et/ou relativement rapides, on choisira pour l'angle de charge du moteur une valeur plus basse, de l'ordre de 40° ou de 50° par exemple, pour laquelle le rendement du moteur est plus faible mais pour laquelle le risque de décrochage de ce moteur est très réduit malgré les variations de sa charge.

On sait en outre que ce risque de décrochage diminue lorsque la fréquence de rotation du rotor du moteur augmente. Il est donc possible de compléter un dispositif de commande selon la présente invention avec des moyens qui augmentent automatiquement la valeur du signal représentant l'angle de charge de consigne (le signal A dans l'exemple de la figure 1) lorsque la valeur du signal qui détermine la fréquence de rotation du rotor du moteur (le signal C dans l'exemple de la figure 1) augmente. De tels moyens n'ont pas été représentés car leur réalisation est à la portée des spécialistes en la matière.

En outre, le fait que les tensions fournies par un dispositif selon la présente invention sont des tensions sinusoïdales a comme avantage que le couple fourni par le moteur associé à ce dispositif ne présente aucune ondulation résiduelle due à ce dispositif lui-même, même si le capteur utilisé pour déterminer la position angulaire du rotor du moteur n'a qu'une faible résolution.

On rappellera encore que ces caractéristiques avantageuses de faible risque de décrochage du moteur et d'absence d'ondulation du couple produit par celui-ci ne peuvent être obtenues simultanément dans les dispositifs connus que par l'emploi de moyens compliqués et onéreux tels que des sources de courants sinusoïdaux et des capteurs de position angulaire à grande résolution.

Par contre, dans les dispositifs selon la présente invention, ces mêmes caractéristiques avantageuses sont obtenues simultanément en utilisant des moyens nettement plus simples et moins chers.

On rappellera encore que la vitesse de rotation maximale et la gamme des températures de fonctionnement d'un moteur commandé par un dispositif connu ayant les caractéristiques qui viennent d'être mentionnées sont limitées par le capteur de position à grande résolution que doit comporter ce moteur.

L'absence d'un tel capteur dans un moteur destiné à être commandé par un dispositif de commande selon la présente invention supprime évidemment ces limitations.

De nombreuses modifications peuvent être apportées au dispositif qui a été décrit ci-dessus sans pour autant que celui-ci ne sorte du cadre de la présente invention.

Ainsi, on voit facilement que les caractéristiques du circuit qui produit le signal de commande du gain des amplificateurs fournissant au moteur les tensions nécessaires à son fonctionnement, c'est-à-dire le circuit 9 dans l'exemple de la figure 1, déterminent dans une grande mesure la stabilité du fonctionnement du dispositif, notamment la stabilité de l'angle de charge du moteur. L'homme du métier comprendra que les caractéristiques de ce circuit peuvent être modifiées pour que cette stabilité du fonctionnement du dispositif soit optimale compte-tenu des caractéristiques des autres éléments du dispositif, de celles du moteur qu'il commande et de celles de la charge entraînée par ce dernier.

Cet homme du métier verra également que ce même circuit peut également être modifié de manière à tenir compte de l'intensité instantanée du courant absorbé par le moteur pour supprimer, ou du moins atténuer, les pointes que présente ce courant lorsque le couple de freinage appliqué au moteur augmente brusquement et qui peuvent être très élevées. Il verra également que, dans les cas où le moteur commandé par un dispositif selon l'invention ne présente pas à ce dispositif une impédance pratiquement résistive, le même circuit peut être également modifié de manière que les courants circulant dans les bobines du stator de ce moteur soient au moins sensiblement sinusoïdaux. Dans de tels cas, le dispositif doit évidemment comporter des moyens de mesure de ce courant, moyens qui sont bien connus de l'homme du métier.

De même, l'homme du métier verra facilement comment modifier le dispositif représenté à la figure 1 pour qu'il puisse commander un moteur ayant un autre nombre de phases, par exemple un moteur hexaphasé, ou ayant un autre nombre de pôles statoriques, par exemple un moteur quadripolaire.

L'homme du métier verra aussi facilement comment modifier le dispositif représenté à la figure 1 pour qu'il puisse commander un moteur équipé d'un capteur de la position angulaire de son rotor ayant une plus grande résolution que celle du capteur décrit ci-dessus, par exemple un capteur ayant une résolution de 30° ou moins.

## Revendications

1. Dispositif de commande d'un moteur synchrone (2) ayant un stator comportant au moins un enroulement statorique et un rotor, ce dispositif de commande comprenant :
- une source de puissance (5,6,7) servant à l'alimentation dudit enroulement;
- des moyens (3) de détection de la position dudit rotor;
- des premiers moyens de commande (4) agencés pour fournir, à ladite source de puissance, un signal périodique (S1,S2,S3) ayant une fréquence prédéterminée;
- des premiers moyens comparateurs (8) agencés pour produire un signal de mesure (P) correspondant à l'angle de charge dudit moteur en réponse à un signal de détection (D1,D2,D3) de la position de ce rotor fourni par lesdits moyens de détection et audit signal périodique fourni par lesdits premiers moyens de commande;
ce dispositif de commande étant caractérisé en ce qu'il comprend en outre des deuxièmes moyens de commande (9) de l'amplitude de la tension d'alimentation agencés pour fournir à ladite source de puissance un signal de commande (G) en fonction dudit signal de mesure (P) et d'un premier signal de consigne (A), ladite source de puissance et lesdits deuxièmes moyens de commande étant agencés de manière que l'amplitude de la tension d'alimentation varie en fonction dudit signal de commande pour que la valeur dudit signal de mesure soit sensiblement égale à la valeur dudit premier signal de consigne.

2. Dispositif de commande selon la revendication 1, caractérisé en ce que ladite fréquence prédéterminée a une valeur définie par un deuxième signal de consigne (C) fourni auxdits premiers moyens de commande (4).

3. Dispositif de commande selon la revendication 1 ou 2, caractérisé en ce que lesdits deuxièmes moyens de commande (9) comprennent des deuxièmes moyens comparateurs (9) servant à produire un signal relatif à la différence temporelle entre ledit signal de mesure (P) et ledit premier signal de consigne (A), ce signal déterminant la valeur dudit signal de commande (G).

4. Dispositif selon l'une des revendications précédente, caractérisé en ce que ledit signal périodique (S1,S2,S3) est sinusoïdal, et en ce que ladite source d'alimentation est formée au moins par un amplificateur (5,6,7) auquel est fourni ledit signal périodique, ledit signal de commande (G) déterminant le gain de cet amplificateur.

5. Dispositif selon la revendication 4 commandant un moteur synchrone triphasé, caractérisé en ce que lesdits premiers moyens de commande sont agencés pour fournir trois signaux sinusoïdaux (S1,S2,S3) déphasés de 120 degrés à trois amplificateurs (5,6,7) formant ladite source de puissance.
